# EUROPEAN PATENT APPLICATION

(11) **EP 4 847 119 A1**
(43) Date of publication of application: **02.12.2026**
(21) Application number: 25761408.1
(22) Date of filing: 17.02.2025
(51) Int. Cl.: B01D 53/86, B01D 53/94, F23J 7/00, F23J 15/00

(54) **DENITRATION DEVICE**

(30) Priority: 29.02.2024 JP 2024029943
(71) Applicant: Mitsubishi Heavy Industries, Ltd., Chiyoda-ku Tokyo 100-8332 (JP)
(72) Inventor: TODAKA, Shimpei, Tokyo 100-8332 (JP); KAKO, Hiroshi, Tokyo 100-8332 (JP)
(74) Representative: Studio Torta S.p.A.
(86) International application number: PCT/JP2025/005246
(87) International publication number: WO 2025/182649

(57) **Abstract**

The object is to improve the NOx removal efficiency. A NOx removal device (10) includes: an ammonia injection device (11) provided in a duct (3) and having a plurality of jetting nozzles (11b), the duct internally forming an exhaust gas flow channel (9) configured to allow an exhaust gas to flow through, and the plurality of jetting nozzles being configured to inject an ammonia gas to an exhaust gas flowing through the exhaust gas flow channel (9); a NOx removal catalyst (13) provided in the duct (3) and downstream of the ammonia injection device (11); and a partition plate (16) provided between the ammonia injection device (11) and the NOx removal catalyst (13) and configured to partition the exhaust gas flow channel (9) into a plurality of divided flow channels (9a). In each of the plurality of divided flow channels (9a), the jetting nozzles (11b) are arranged at 8 jetting nozzles/m² or greater in a cross section orthogonal to a flow direction of the exhaust gas.

## Description

### [Technical Field]

The present disclosure relates to a NOx removal device.

### [Background Art]

In Heat Recovery Steam Generators (HRSGs), an exhaust gas discharged from a gas turbine or the like passes through inside a duct, heat exchange is performed between the exhaust gas and water or steam in a heat transfer tube, and thereby steam is generated. Inside the duct of such a heat recovery steam generator, a plurality of heat exchangers having a number of heat transfer tubes through which water or steam flows, a NOx removal device configured to remove (denitrate) nitrogen oxides (NOx) in an exhaust gas, or the like are installed.

For example, in a NOx removal device, a reducing agent (for example, ammonia or urea water) having an effect of reducing nitrogen oxides is injected from an injection device to an exhaust gas flowing through inside a duct, the exhaust gas subjected to the injection of the reducing agent passes through a reaction device (for example, a NOx removal catalyst), and thereby nitrogen oxides in the exhaust gas are removed. As such a NOx removal device, for example, a NOx removal device disclosed in Patent Literature 1 is known.

Patent Literature 1 discloses a device in which an exhaust gas generated by combustion in a boiler passes through an exhaust gas duct, is fed to a NOx removal device in which a catalyst layer has been inserted, and is discharged to the atmosphere after treatment on nitrogen oxides is performed in the NOx removal device. In this device, an ammonia injection nozzle for injecting ammonia is provided in the exhaust gas duct used for guiding an exhaust gas to the NOx removal device. Further, divided flow channels configured to divide an exhaust gas into multiple flows and guide them are formed in the exhaust gas duct.

### [Citation List]

### [Patent Literature]

[PTL 1]
Japanese Patent No. 3554997

### [Summary of Invention]

### [Technical Problem]

To increase the removal efficiency of nitrogen oxides (hereafter, referred to as "NOx removal efficiency") in a reaction device, it is effective to make a molar ratio between nitrogen oxides and a reducing agent uniform in a flow channel cross section of a duct.

In a NOx removal device, however, unevenness in the flow rate of an exhaust gas may occur over the entire flow channel cross section of a duct due to various factors. When the reducing agent is injected to the exhaust gas in a state where unevenness occurs in the flow rate at a position where the injection device is provided, unevenness will occur in the concentration of the reducing agent over the entire flow channel cross section. When an exhaust gas flows into a reaction device while unevenness occurs in the concentration of the reducing agent, this may cause unevenness in the amount of the inflow reducing agent at respective positions in the reaction device. When unevenness occurs in the amount of the reducing agent flowing into the reaction device, NOx removal efficiency of the reaction device may be reduced.

Further, as with Patent Literature 1, when the plurality of divided flow channels are formed in the duct, if a suitable density of the ammonia injection nozzles corresponding to each of the divided flow channels is not set, a region in which a reducing agent is not sufficiently diffused into an exhaust gas (a low-concentration region) will occur. Occurrence of such a region in which the reducing agent is not sufficiently diffused into an exhaust gas (a low-concentration region) will cause unevenness in the amount of the reducing agent flowing in respective positions of the reaction device and may reduce the NOx removal efficiency in the reaction device.

In the device disclosed in Patent Literature 1, however, the density of the ammonia injection nozzles provided in respective divided flow channels is not taken into consideration. Thus, the NOx removal efficiency in the reaction device may be reduced.

The present disclosure has been made in view of such circumstances and intends to provide a NOx removal device that can improve NOx removal efficiency.

### [Solution to Problem]

To solve the problem described above, the NOx removal device of the present disclosure employs the following solutions.

A NOx removal device according to one aspect of the present disclosure includes: an injection device provided in a duct and having a plurality of injection parts, the duct internally forming an exhaust gas flow channel configured to allow an exhaust gas to flow through, and the plurality of injection parts being configured to inject a reducing agent to an exhaust gas flowing through the exhaust gas flow channel; a NOx removal catalyst provided in the duct and downstream of the injection device; and a partition plate provided between the injection device and the NOx removal catalyst and configured to partition the exhaust gas flow channel into a plurality of divided flow channels, and in each of the plurality of divided flow channels, the injection parts are arranged at 8 injection parts/m² or greater in a cross section orthogonal to a flow direction of the exhaust gas.

### [Advantageous Effects of Invention]

According to the present disclosure, NOx removal efficiency can be improved.

### [Brief Description of Drawings]

[Fig. 1]

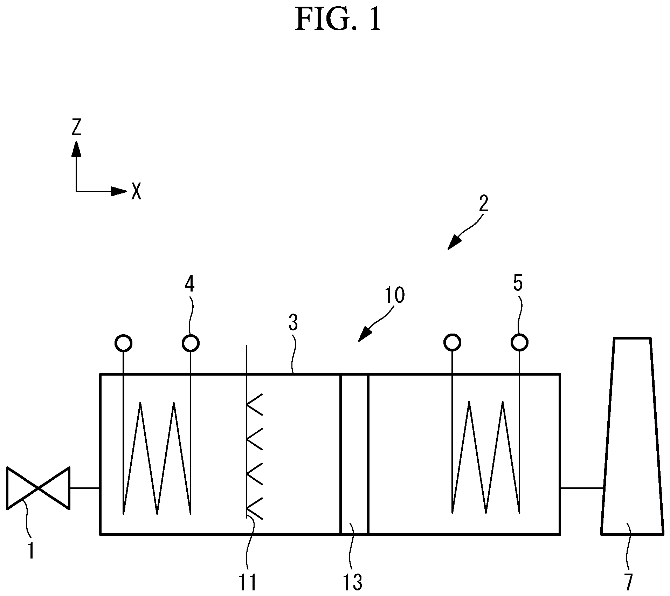

   Fig. 1 is a schematic configuration diagram illustrating a heat recovery steam generator according to a first embodiment of the present disclosure.
[Fig. 2]

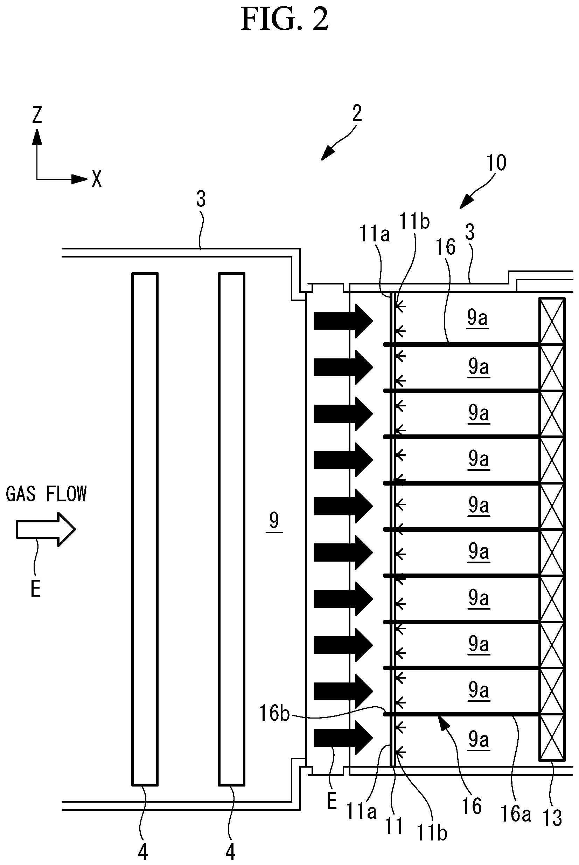

   Fig. 2 is a front view illustrating a NOx removal device according to the first embodiment of the present disclosure.
[Fig. 3]

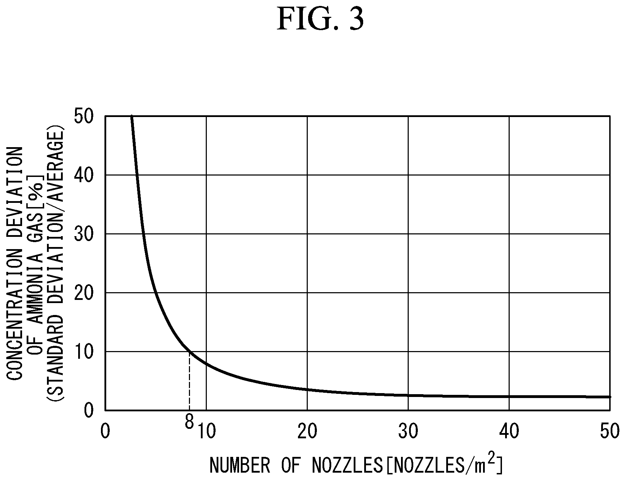

   Fig. 3 is a graph illustrating a relationship between the number of nozzles per 1 m² and the ammonia concentration.
[Fig. 4]

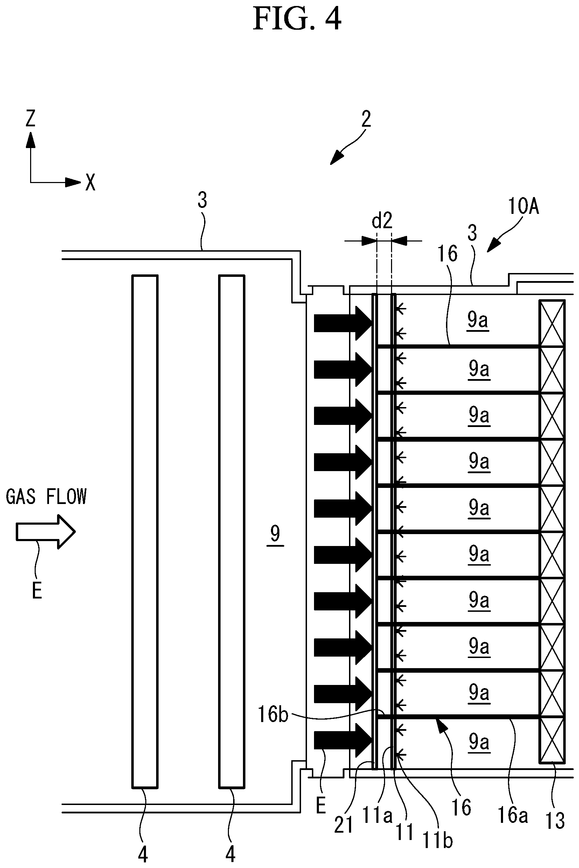

   Fig. 4 is a front view illustrating a NOx removal device according to a second embodiment of the present disclosure.
[Fig. 5]

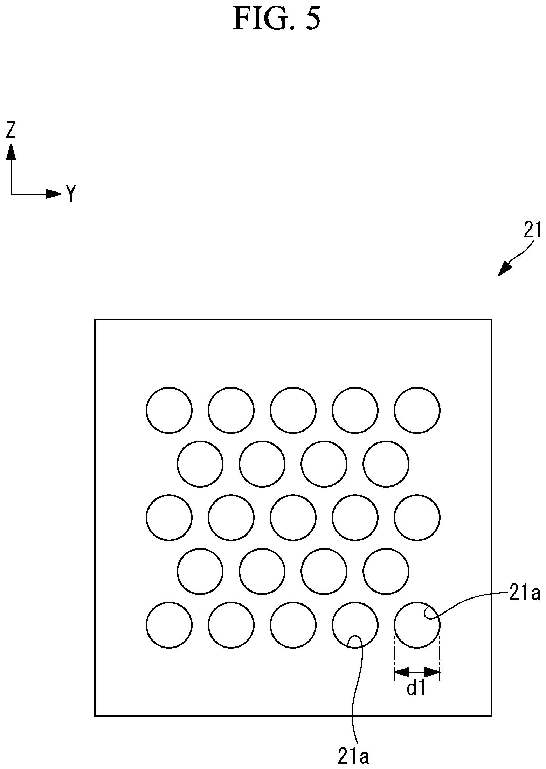

   Fig. 5 is a schematic side view illustrating a perforated plate according to the second embodiment of the present disclosure.
[Fig. 6]

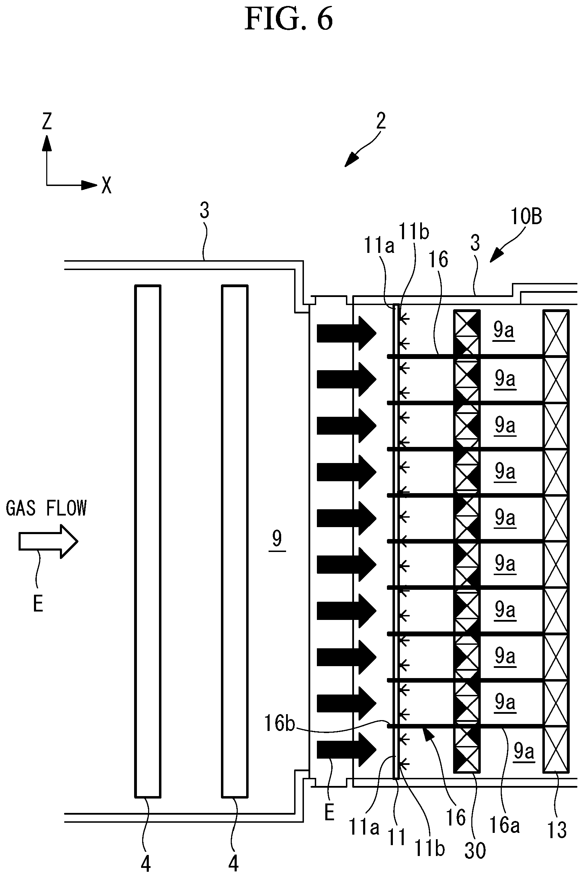

   Fig. 6 is a front view illustrating a NOx removal device according to a third embodiment of the present disclosure.

### [Description of Embodiments]

Embodiments of the NOx removal device according to the present disclosure will be described below with reference to the drawings.

### [First Embodiment]

The NOx removal device according to the first embodiment of the present disclosure will be described below with reference to Fig. 1 to Fig. 3. In the following description and drawings, the vertical direction is defined as a Z-axis direction, a direction of the horizontal directions in which the exhaust gas flows is defined as an X-axis direction, and the direction orthogonal to the X-axis direction and the Z-axis direction is defined as a Y-axis direction. Further, the flow direction of the exhaust gas is indicated by the arrow E in Fig. 2.

First, a heat recovery steam generator 2 according to the present embodiment will be described with reference to Fig. 1.

As illustrated in Fig. 1, the heat recovery steam generator 2 according to the present embodiment is a horizontal-type heat recovery steam generator in which an exhaust gas flows in the X-axis direction (predetermined direction). In the present embodiment, the X-axis direction, which is a direction in which an exhaust gas flows, is the horizontal direction.

Note that, although an example in which a NOx removal device is provided inside a horizontal-type duct in which an exhaust gas flows horizontally is described in the present embodiment, the present disclosure is not limited thereto. For example, a NOx removal device may be provided inside a vertical-type duct in which an exhaust gas flows vertically.

The heat recovery steam generator 2 according to the present embodiment includes a duct 3 provided extending in the X-axis direction and configured to allow an exhaust gas to flow through the inside thereof, a NOx removal device 10 provided inside the duct 3 and configured to remove nitrogen oxides (NOx) contained in the exhaust gas, and a first heat exchange unit 4 and a second heat exchange unit 5 provided inside the duct 3. An exhaust gas flow channel 9 through which an exhaust gas flows is formed inside the duct 3.

The first heat exchange unit 4 has a plurality of heat transfer tubes (not illustrated) provided extending vertically (in the Z-axis direction) so as to intersect the exhaust gas flow direction. The length in the Z-axis direction of each heat transfer tube (height H) is 5 m or greater and 30 m or less (see Fig. 2). The first heat exchange unit 4 recovers heat of an exhaust gas by heat exchange between a heat medium (for example, water or steam) flowing through inside the heat transfer tube and an exhaust gas. The first heat exchange unit 4 is provided upstream of the NOx removal device 10. The first heat exchange unit 4 may be, for example, a superheater configured to superheat a heat medium flowing through inside the heat transfer tubes.

The second heat exchange unit 5 has a plurality of heat transfer tubes (not illustrated) provided extending vertically (in the Z-axis direction) so as to intersect the exhaust gas flow direction. The second heat exchange unit 5 recovers heat of an exhaust gas by heat exchange between a heat medium (for example, water or steam) flowing through inside the heat transfer tube and an exhaust gas. The second heat exchange unit 5 is provided downstream from the NOx removal device 10. The second heat exchange unit 5 may be, for example, an evaporator configured to evaporate a heat medium flowing through inside the heat transfer tubes.

A high-temperature combustion exhaust gas (exhaust gas) discharged from a combustion engine 1 is introduced from the inlet of the duct 3 into the duct 3, passes through the first heat exchange unit 4, the NOx removal device 10, and the second heat exchange unit 5 in order, and is then discharged from a stack 7 through the outlet of the duct 3.

Next, the NOx removal device 10 will be described in detail with reference to Fig. 1 and Fig. 2.

The NOx removal device 10 supplies a reducing agent having an effect of reducing nitrogen oxides such as ammonia, urea water, or the like to an exhaust gas flowing through inside the duct 3, promotes a reaction between nitrogen oxides (NOx) and a reducing agent in the exhaust gas supplied with the reducing agent by a catalytic action of a NOx removal catalyst 13, and thereby removes or reduces nitrogen oxides in the exhaust gas. In the following description, an example in which an ammonia gas is used as a reducing agent will be described. Note that the reducing agent according to the present disclosure is not limited to the ammonia gas. For example, the reducing agent may be liquid ammonia or may be other than ammonia.

As illustrated in Fig. 1 and Fig 2, the NOx removal device 10 is provided downstream of the first heat exchanger unit 4. The NOx removal device 10 includes an ammonia injection device (injection device) 11 and the NOx removal catalyst 13 arranged in this order from the upstream of the exhaust gas flow in the duct 3.

As illustrated in Fig. 2, the ammonia injection device 11 has a plurality of ammonia pipes 11a extending in the Z-axis direction and a plurality of jetting nozzles (injection parts) 11b provided on the side face of each of the ammonia pipes 11a. The ammonia injection device 11 jets an ammonia gas from the plurality of jetting nozzles 11b to downstream of the duct 3 in the X-axis direction to inject ammonia to an exhaust gas flowing through inside the duct 3. Note that the direction in which the jetting nozzle 11b jets an ammonia gas is not limited to the direction described above. For example, the jetting nozzle 11b may jet an ammonia gas upstream in the X-axis direction or may jet an ammonia gas in a direction different from the X-axis direction.

Each ammonia pipe 11a is a circular cylindrical member. An ammonia flows through inside the ammonia pipe 11a.

The plurality of ammonia pipes 11a are aligned at a predetermined interval (equal interval, for example) along the Y-axis direction (the depth direction of the sheet of Fig. 2). The plurality of ammonia pipes 11a are provided over substantially the entire region in the Y-axis direction.

The plurality of jetting nozzles 11b are aligned at a predetermined interval (equal interval, for example) along the extending direction of the ammonia pipe 11a (that is, the Z-axis direction). An ammonia gas is jetted from each jetting nozzle 11b at a predetermined jetting pressure. Each jetting nozzle 11b jets an ammonia gas in a conical shape. Each jetting nozzle 11b jets an ammonia gas in the downstream direction.

The NOx removal catalyst 13 is arranged so as to cover substantially the entire region of the flow channel cross section of the duct 3. For example, the NOx removal catalyst 13 has a rectangular cylinder-shaped rectangular frame part (not illustrated) and a plurality of catalysts (not illustrated) provided inside the rectangular frame part. Although an example of the shape of the catalyst may be a honeycomb shape or a corrugate shape through which an exhaust gas can pass in the X-axis direction, the shape is not limited thereto. The catalyst promotes a reducing reaction of NOx (nitrogen oxides) contained in an exhaust gas (combustion gas) passing through the inside to remove at least a part of NOx. For example, the component of the catalyst is based on titanium oxide.

Further, the NOx removal device 10 includes a plurality of partition plates 16 that are provided between the ammonia injection device 11 and the NOx removal catalyst 13 and partition the exhaust gas flow channel 9 into a plurality of divided flow channels 9a.

The plurality of partition plates 16 are aligned at a predetermined interval (equal interval, for example) in the Z-axis direction. The plurality of partition plates 16 are arranged over substantially the entire region in the Z-axis direction.

Each partition plate 16 is a plate-like member and provided so that the plate face thereof is horizontal. The partition plate 16 extends over substantially the entire region in the Y-axis direction.

The partition plate 16 has, in an integrated manner, a base part 16a provided between the ammonia injection device 11 and the NOx removal catalyst 13 and a protruding part 16b protruding upstream of the ammonia injection device 11 from an upstream end of the base part 16a.

The partition plate 16 connects the ammonia injection device 11 and the NOx removal catalyst 13 to each other. The downstream end of the partition plate 16 is connected to the upstream end of the NOx removal catalyst 13. The upstream end of the partition plate 16 (in detail, the upstream end of the base part 16a) is connected to the ammonia injection device 11 (in detail, the ammonia pipe 11a). The protruding part 16b is located upstream of the ammonia injection device 11. That is, the upstream end of the partition plate 16 is located upstream of the ammonia injection device 11 (in detail, the ammonia pipe 11a).

One partition plate 16 defines a divided flow channel 9a between the one partition plate 16 and another partition plate 16 adjacent in the Z-axis direction. Further, the partition plate 16 provided at the uppermost level defines a divided flow channel 9a between the partition plate 16 and the ceiling portion of the duct 3. Further, the partition plate 16 provided at the lowermost level defines a divided flow channels 9a between the partition plate 16 and the bottom face portion of the duct 3. The flow channel area of each divided flow channel 9a may be constant. Each divided flow channel 9a guides an exhaust gas flowing in from an inlet and an ammonia gas jetted from the ammonia injection device 11 to the NOx removal catalyst 13.

In each divided flow channel 9a, the jetting nozzles 11b are arranged so that the density thereof is 8 jetting nozzles/m² or greater in a cross section (flow channel cross section) orthogonal to a flow direction (X-axis direction) of the exhaust gas. In other words, in each divided flow channel 9a, when viewed from a flow direction (X-axis direction) of the exhaust gas, the jetting nozzles 11b are arranged so that the density thereof is 8 jetting nozzles/m² or greater.

According to the present embodiment, the following effects and advantages are achieved.

The present embodiment includes the partition plate 16 provided between the ammonia injection device 11 and the NOx removal catalyst 13 and configured to partition the exhaust gas flow channel 9 into a plurality of flow channels. Accordingly, in a region between the jetting nozzle 11b and the NOx removal catalyst 13, the exhaust gas flow channel 9 is partitioned into a plurality of flow channels by the partition plate 16. A large pressure loss (flow resistance) occurs in an exhaust gas passing through the NOx removal catalyst 13. Thus, resistance of the NOx removal catalyst 13 acts on the exhaust gas flowing through respective divided flow channels 9a partitioned by the partition plate 16. Accordingly, since the exhaust gas is less likely to flow through the divided flow channels 9a, the amount of the exhaust gas flowing in respective divided flow channels 9a is made uniform (see black arrows in Fig. 2). Therefore, the flow rate of the exhaust gas is made uniform at the upstream end of the partition plate 16 (that is, the end on the ammonia injection device 11 side). In such a way, at a position close to the ammonia injection device 11, since the flow rate of the exhaust gas can be made uniform, unevenness in the ammonia gas concentration at respective positions of the flow channel cross section can be suppressed. Thus, the exhaust gas may flow into the NOx removal catalyst 13 with the suppressed unevenness in the ammonia gas concentration, a NOx removal reaction suitably occurs in the NOx removal catalyst 13. Thus, the NOx removal efficiency can be improved.

Further, in the present embodiment, in each divided flow channel 9a, the jetting nozzles 11b are arranged so that the density thereof is 8 jetting nozzles/m² or greater in a cross section orthogonal to a flow direction of the exhaust gas. In such a way, the number of jetting nozzles 11b corresponding to each divided flow channel 9a is designed to a certain number or greater, and thereby a suitable amount of the ammonia gas can be injected to an exhaust gas in each divided flow channel 9a. Accordingly, a region in which an ammonia gas is not sufficiently diffused in an exhaust gas (a low-concentration region) is less likely to appear. Therefore, the ammonia gas concentration at the inlet of the NOx removal catalyst 13 can be made more uniform. Thus, since a NOx removal reaction suitably occurs in the NOx removal catalyst 13, the NOx removal efficiency can be improved.

The effect of making the ammonia gas concentration uniform at the inlet of the NOx removal catalyst 13 will be described with reference to the graph of Fig. 3. Fig. 3 is a graph illustrating a relationship between the number of nozzles (horizontal axis) and the concentration deviation of the ammonia gas (vertical axis). The numerical value on the horizontal axis indicates the number of nozzles installed per square meter. Further, the numerical value on the vertical axis indicates the concentration deviation of the ammonia gas in %. Note that the concentration deviation is calculated by standard deviation/average.

Note that the concentration deviation indicated in the horizontal axis may be the concentration deviation at a point downstream by 100D from the ammonia pipe 11a when the diameter of the ammonia pipe 11a is defined as D (for example, greater than or equal to 30 mm and less than or equal to 100mm).

Further, the graph of Fig. 3 may be a graph illustrating a relationship between the number of nozzles (horizontal axis) and the concentration deviation of the ammonia gas (vertical axis) in conditions where the temperature of the exhaust gas is greater than or equal to 150 °C and less than or equal to 450 °C, the flow rate of the exhaust gas is greater than or equal to 2 m/s and less than or equal to 10 m/s, and the pressure of the exhaust gas is greater than or equal to -10 KPa and less than or equal to 10 KPa. Further, the nozzle may have structure in which holes are provided in the ammonia pipe or structure in which a circular cylindrical nozzle protrudes from the pipe, the jetting direction of the nozzle may be the same direction as, the opposite direction to, or the perpendicular direction to the exhaust gas flow, and the jetting rate of the nozzle may be greater than or equal to 2 m/s and less than or equal to 50 m/s. When such nozzle structure or the like are applied, there is no change in the tendency of diffusion (spreading) of ammonia, and a similar concentration distribution is obtained. Thus, when such nozzle structure or the like are employed under the condition where the number of nozzles is 8 nozzles/m² or greater as described later, this will be particularly useful for forming the uniform distribution with the concentration deviation of 10 % or less.

As illustrated in Fig. 3, the concentration deviation of the ammonia gas significantly decreases from the number of nozzles (density) being 8 nozzles/m² or greater. Thus, when the number of nozzles (density) is 8 nozzles/m² or greater, the concentration deviation of the ammonia gas can be suitably reduced. That is, the ammonia gas concentration at the inlet of the NOx removal catalyst 13 can be made more uniform.

Further, as a method for suppressing unevenness in the ammonia gas concentration, for example, a method of providing a mixer between the ammonia injection device 11 and the NOx removal catalyst 13 can be considered. When the mixer is provided, however, it is required to provide a region in which an exhaust gas and an ammonia gas that have been stirred in the mixer are mixed. Thus, since it is required to secure a long distance between the mixer and the NOx removal catalyst 13 and it is also required to secure a space in which the mixer is installed, the distance from the ammonia injection device 11 to the NOx removal catalyst 13 may be longer.

In contrast, in the present embodiment, unevenness in the ammonia gas concentration is suppressed by the partition plate 16. Accordingly, for example, compared to the case where the mixer is provided between the ammonia injection device 11 and the NOx removal catalyst 13, the distance between the ammonia injection device 11 and the NOx removal catalyst 13 can be shorter. Thus, the size of the NOx removal device 10 can be reduced.

### [Second Embodiment]

Next, the second embodiment of the present disclosure will be described with reference to Fig. 4 and Fig. 5. The present embodiment differs from the first embodiment in that a perforated plate 21 is provided upstream of the ammonia injection device 11. Since other features are the same as those in the first embodiment, the same components are labeled with the same reference numerals, and the description thereof is omitted.

As illustrated in Fig. 4, a NOx removal device 10A according to the present embodiment is provided upstream of the ammonia injection device 11 and includes the perforated plate 21 configured to rectify an exhaust gas flowing through inside the duct 3.

The perforated plate 21 is arranged so as to cover substantially the entire region of the flow channel cross section of the duct 3. The perforated plate 21 is connected to the upstream ends of all the partition plates 16. In detail, the perforated plate 21 is connected to the upstream ends of the protruding parts 16b of all the partition plates 16.

The perforated plate 21 is a metal plate-like member. In the perforated plate 21, as illustrated in Fig. 5, a plurality of through holes 21a penetrating through in the X-axis direction are formed. The plurality of through holes 21a are aligned at predetermined intervals along the Z-axis direction and Y-axis direction. The diameter d of each through hole 21a is a length that enables rectification of an exhaust gas.

Further, the distance d2 from the downstream end of the perforated plate 21 to the upstream end of the ammonia injection device 11 is a length that is greater than or equal to 11 times the diameter d1 of each through hole 21a formed on the perforated plate 21. That is, Equation (1) below is established.$d 2 \geq 11 d 1$ (1)

According to the present embodiment, the following effects and advantages are achieved.

In the present embodiment, the perforated plate 21 is provided upstream of the ammonia injection device 11. Accordingly, since an exhaust gas is rectified by the perforated plate 21 in upstream of the jetting nozzle 11b, the flow rate distribution of the exhaust gas in a flow channel cross section of the duct 3 can be made uniform. Therefore, the jetting nozzle 11b injects an ammonia gas to the exhaust gas whose flow rate has been made uniform. Thus, unevenness in the ammonia gas concentration due to unevenness in the flow rate at respective positions in a flow channel cross section can be suppressed. Thus, the exhaust gas may flow into the NOx removal catalyst 13 with the suppressed unevenness in the ammonia gas concentration, a NOx removal reaction suitably occurs in the NOx removal catalyst 13, and this can improve the NOx removal efficiency.

Further, in the present embodiment, the distance from the perforated plate 21 to the ammonia injection device 11 is longer than the length that is 11 times the diameter of the through hole 21a. When an exhaust gas passes through the through holes 21a of the perforated plate 21, a jet flow occurs in the exhaust gas. In the present embodiment, however, since the distance from the perforated plate 21 to the ammonia injection device 11 can be increased, an exhaust gas with sufficiently attenuated jet flow reaches the jetting nozzle 11b. That is, an exhaust gas with suppressed unevenness in the flow rate at respective positions of the flow channel cross section reaches the ammonia injection device 11. Accordingly, the ammonia gas can be injected to an exhaust gas with suppressed unevenness. Thus, unevenness in the ammonia gas concentration due to unevenness in the flow rate at respective positions of the flow channel cross section can be suppressed. Thus, the exhaust gas may flow into the NOx removal catalyst 13 with the suppressed unevenness in the ammonia gas concentration, a NOx removal reaction suitably occurs in the NOx removal catalyst 13, and this can improve the NOx removal efficiency.

### [Third Embodiment]

Next, the third embodiment of the present disclosure will be described with reference to Fig. 6. The present embodiment differs from the first embodiment in that a mixer 30 is provided between the ammonia injection device 11 and the NOx removal catalyst 13. Since other features are the same as those in the first embodiment, the same components are labeled with the same reference numerals, and the description thereof is omitted.

As illustrated in Fig. 6, a NOx removal device 10B according to the present embodiment is provided between the ammonia injection device 11 and the NOx removal catalyst 13 and includes the mixer 30 configured to mix an exhaust gas with a reducing agent.

The mixer 30 is provided at an intermediate position of the divided flow channel 9a. The position at which the mixer 30 is provided (a position in the X-axis direction) may be determined based on the temperature, the flow rate, or the like of the exhaust gas. For example, the mixer 30 may be provided at a position closer to the ammonia injection device 11 than to the NOx removal catalyst 13.

The mixer 30 is arranged so as to cover substantially the entire region of a flow channel cross section of the duct 3.

For example, the mixer 30 has structure in which regular shapes that cause a swirl flow by a combination of a plurality of flat faces or curved faces are aligned.

According to the present embodiment, the following effects and advantages are achieved.

The present embodiment includes the mixer 30 provided between the ammonia injection device 11 and the NOx removal catalyst 13 and configured to mix an exhaust gas with an ammonia gas. Accordingly, since diffusion of an injected ammonia gas can be facilitated, unevenness in the ammonia gas concentration can be suppressed. Thus, the exhaust gas may flow into the NOx removal catalyst 13 with the suppressed unevenness in the ammonia gas concentration, a NOx removal reaction suitably occurs in the NOx removal catalyst 13, and this can improve the NOx removal efficiency.

Note that the present disclosure is not limited to each embodiment described above and can be modified as appropriate within the scope not depending from the spirit thereof.

The NOx removal device according to the embodiment described above is understood as follows, for example.

The NOx removal device according to the first aspect of the present disclosure includes: an injection device (11) provided in a duct (3) and having a plurality of injection parts (11b), the duct internally forming an exhaust gas flow channel (9) configured to allow an exhaust gas to flow through, and the plurality of injection parts being configured to inject a reducing agent to an exhaust gas flowing through the exhaust gas flow channel (9); a NOx removal catalyst (13) provided in the duct (3) and downstream of the injection device (11) ; and a partition plate (16) provided between the injection device (11) and the NOx removal catalyst (13) and configured to partition the exhaust gas flow channel (9) into a plurality of divided flow channels (9a), and in each of the plurality of divided flow channels (9a), the injection parts (11b) are arranged at 8 injection parts/m² or greater in a cross section orthogonal to a flow direction of the exhaust gas.

The above configuration includes the partition plate provided between the injection device and the NOx removal catalyst and configured to partition the exhaust gas flow channel into a plurality of flow channels. Accordingly, in a region between the injection part and the NOx removal catalyst, the exhaust gas flow channel is partitioned into a plurality of flow channels by the partition plate. A large pressure loss (flow resistance) occurs in an exhaust gas passing through the NOx removal catalyst. Thus, resistance of the NOx removal catalyst acts on an exhaust gas flowing through respective divided flow channels partitioned by the partition plate. Accordingly, since the exhaust gas is less likely to flow through in the divided flow channels, the amount of the exhaust gas flowing in respective divided flow channels is made uniform. Therefore, the flow rate of an exhaust gas is made uniform at the upstream end of the partition plate (that is, the end on the injection device side). In such a way, at a position close to the injection device, since the flow rate of the exhaust gas can be made uniform, unevenness in the reducing agent concentration at respective positions of the flow channel cross section can be suppressed. Thus, the exhaust gas may flow into the NOx removal catalyst with the suppressed unevenness in the reducing agent concentration, a NOx removal reaction suitably occurs in the NOx removal catalyst, and this can improve the NOx removal efficiency.

Further, in the above configuration, in each divided flow channel, the injection parts are arranged so that the density thereof is 8 injection parts/m² or greater in a cross section orthogonal to a flow direction of the exhaust gas. In such a way, the number of injection parts corresponding to each divided flow channel is designed to a certain number or greater, and thereby a suitable amount of the reducing agent can be injected to an exhaust gas in each divided flow channel. Therefore, a region in which a reducing agent is not sufficiently diffused in an exhaust gas (a low-concentration region) can be less likely to occur. Thus, the reducing agent concentration at the inlet of the NOx removal catalyst can be made more uniform. Thus, since a NOx removal reaction suitably occurs in the NOx removal catalyst, the NOx removal efficiency can be improved.

Further, as a method for suppressing unevenness in the reducing agent concentration, for example, a method of providing a mixer between the injection device and the NOx removal catalyst can be considered. When the mixer is provided, however, it is required to provide a region in which an exhaust gas and a reducing agent that have been stirred in the mixer are mixed. Thus, since it is required to secure a long distance between the mixer and the NOx removal catalyst and it is also required to secure a space in which the mixer is installed, the distance from the injection device to the NOx removal catalyst may be longer.

In contrast, in the above configuration, unevenness in the reducing agent concentration is suppressed by the partition plate. Accordingly, for example, compared to the case where the mixer is provided between the injection device and the NOx removal catalyst, the distance between the injection device and the NOx removal catalyst can be shorter. Thus, the size of the NOx removal device can be reduced.

In the NOx removal device according to the second aspect of the present disclosure, in the first aspect described above, the partition plate (16) has a base part (16a) provided between the injection device (11) and the NOx removal catalyst (13) and a protruding part (16b) protruding upstream of the injection device (11) from an upstream end of the base part (16a), and the NOx removal device includes: a flow straightener provided to the protruding part (16a) and configured to rectify an exhaust gas flowing through inside the duct (3).

In the above configuration, the rectifying part is provided upstream of the injection device. Accordingly, since an exhaust gas is rectified by the rectifying part upstream of the injection part, the flow rate distribution of an exhaust gas in a flow channel cross section of the duct can be made uniform. Therefore, the injection part injects a reducing agent to the exhaust gas whose flow rate has been made uniform. It is thus possible to suppress unevenness in the reducing agent concentration due to unevenness in the flow rate at each position in a flow channel cross section. Thus, the exhaust gas may flow into the NOx removal catalyst with the suppressed unevenness in the reducing agent concentration, a NOx removal reaction suitably occurs in the NOx removal catalyst, and this can improve the NOx removal efficiency.

In the NOx removal device according to the third aspect of the present disclosure, in the second aspect described above, the flow straightener has a perforated plate (21) having a plurality of through holes, and the distance from the perforated plate (21) to the injection device (11) is longer than a length that is 11 times the diameter of each of the plurality of through holes.

In the above configuration, an exhaust gas passing through the perforated plate can be rectified. Accordingly, in the perforated plate, the flow rate distribution of the exhaust gas in the flow channel cross section of the duct can be made uniform. Thus, the NOx removal efficiency can be improved.

The NOx removal device according to the fourth aspect of the present disclosure, in any of the above first aspect to the third aspect, includes a mixer (30) provided between the injection device (11) and the NOx removal catalyst (13) and configured to mix an exhaust gas with a reducing agent.

The above configuration includes the mixer provided between the injection device and the NOx removal catalyst and configured to mix an exhaust gas with a reducing agent. Accordingly, since diffusion of an injected reducing agent can be facilitated, unevenness in the reducing agent concentration can be suppressed. Thus, the exhaust gas may flow into the NOx removal catalyst with the suppressed unevenness in the reducing agent concentration, a NOx removal reaction suitably occurs in the NOx removal catalyst, and this can improve the NOx removal efficiency.

### [Reference Signs List]

- 1: combustion engine
- 2: heat recovery steam generator
- 3: duct
- 4: first heat exchange unit
- 5: second heat exchange unit
- 7: stack
- 9: exhaust gas flow channel
- 9a: divided flow channel
- 10: NOx removal device
- 10A: NOx removal device
- 10B: NOx removal device
- 11: ammonia injection device (injection device)
- 11a: ammonia pipe
- 11b: jetting nozzle (injection part)
- 13: NOx removal catalyst
- 16: partition plate
- 16a: base part
- 16b: protruding part
- 21: perforated plate (flow straightener)
- 21a: through hole
- 30: mixer

## Claims

1. A NOx removal device comprising:
an injection device provided in a duct and having a plurality of injection parts, the duct internally forming an exhaust gas flow channel configured to allow an exhaust gas to flow through, and the plurality of injection parts being configured to inject a reducing agent to an exhaust gas flowing through the exhaust gas flow channel;
a NOx removal catalyst provided in the duct and downstream of the injection device; and
a partition plate provided between the injection device and the NOx removal catalyst and configured to partition the exhaust gas flow channel into a plurality of divided flow channels,
wherein in each of the plurality of divided flow channels, the injection parts are arranged at 8 injection parts/m² or greater in a cross section orthogonal to a flow direction of the exhaust gas.

2. The NOx removal device according to claim 1,
wherein the partition plate has a base part provided between the injection device and the NOx removal catalyst and a protruding part protruding upstream of the injection device from an upstream end of the base part, and
the NOx removal device comprising:
a flow straightener provided to the protruding part and configured to rectify an exhaust gas flowing through inside the duct.

3. The NOx removal device according to claim 2,
wherein the flow straightener has a perforated plate having a plurality of through holes, and
wherein the distance from the perforated plate to the injection device is longer than 11 times the diameter of each of the plurality of through holes.

4. The NOx removal device according to any one of claims 1 to 3 comprising a mixer provided between the injection device and the NOx removal catalyst and configured to mix an exhaust gas with a reducing agent.
